Europäisches Patentamt

European Patent Office

Office européen des brevets

(11) Veröffentlichungsnummer: **0 242 645 B1**

## EUROPÄISCHE PATENTSCHRIFT

(45) Veröffentlichungstag der Patentschrift: **08.01.92**

(51) Int. Cl.⁵: **H01R 25/16**

(21) Anmeldenummer: **87104779.1**

(22) Anmeldetag: **01.04.87**

(54) **Montageelement für Leitungsführungskanäle.**

(30) Priorität: **08.04.86 DE 8609417 U**

(43) Veröffentlichungstag der Anmeldung:
**28.10.87 Patentblatt 87/44**

(45) Bekanntmachung des Hinweises auf die
Patenterteilung:
**08.01.92 Patentblatt 92/02**

(84) Benannte Vertragsstaaten:
**AT BE CH DE ES FR GB IT LI NL SE**

(56) Entgegenhaltungen:
**DE-A- 2 539 299**
**DE-A- 3 305 602**
**DE-U- 7 728 373**
**GB-A- 2 065 988**

(73) Patentinhaber: **Tehalit GmbH**
**Postfach 128**
**W-6751 Heltersberg/Pfalz(DE)**

(72) Erfinder: **Pollak, Gottfried, Dipl.-Ing.**
**Finkenweg 2**
**W-6757 Waldfischbach-Burgalben(DE)**
Erfinder: **Müller, Günther**
**Blumenstrasse 6**
**W-7901 Illerrieden(DE)**
Erfinder: **Otte, Günter, Ing. grad.**
**Am Steinhügel 61**
**W-5860 Iserlohn(DE)**

(74) Vertreter: **Patentanwälte Dipl.-Ing. F.W. Möll**
**Dipl.-Ing. H.Ch. Bitterich**
**Langstrasse 5 Postfach 2080**
**W-6740 Landau/Pfalz(DE)**

## Beschreibung

Die Erfindung betrifft ein Montageelement zum Einbau in Leitungsführungskanäle, die an der Kanalrückwand Längsnuten mit etwa T-förmigem Querschnitt besitzen, umfassend ein etwa rechteckiges Bodenteil mit einem zentrischen Längsschlitz, in den ein etwa Z-förmiger Klemmbügel so eingesetzt ist, daß im montierten Zustand sein auf der Bodenteil-Oberseite befindlicher Schenkel flach auf dieser aufliegt und sein auf der Bodenteil-Unterseite befindlicher Schenkel in die Nut eingreift und das Montageelement gegen eine den Eingang der Nut begrenzende Wand preßt.

Leitungsführungskanäle sind in großer Zahl bekannt, beispielsweise aus der DE-A-21 23 958, den DE-B-12 16 957, 12 76 153, 20 17 232 oder auch dem DE-U-77 11 728. Sie bestehen üblicherweise aus extrudiertem, thermoplastischem Kunststoff, aus stranggepreßtem Aluminium oder aus profiliertem Stahlblech. Die offene Seite des Kanals kann mit einem Deckel abgedeckt werden. Die Montage der Kanäle erfolgt an Decken, Wänden, unter Fensterbrüstungen, an Labortischen usw.

Zur Befestigung von elektrischen Installationsgeräten, beispielsweise von Steckdosen, Schaltern, Fernsteuerempfängern usw., in derartigen Kanälen benötigt man spezielle Montageelemente. Derartige Montageelemente sind beispielsweise beschrieben in den DE-U-70 47 743 und 77 28 102. Es handelt sich hier um Gerätedosen, in die handelsübliche Installationsgeräte eingesetzt werden können. Die Befestigung der als Montageelement dienenden Gerätedose an der Kanalrückwand erfolgt mit Hilfe eines Z-förmigen Klemmelements, welches durch einen zentrischen Schlitz im Boden des Montageelements so hindurchgesteckt ist, daß es in die Kanallängsnut eingreift und in der montierten Stellung, wenn der innere Schenkel des Klemmelements flach auf dem Boden liegt, eine Klemmverbindung zwischen der Wand der Längsnut und dem Bodenteil des Montageelements herstellt.

Bei diesen Konstruktionen ist das Z-förmig gebogene Klemmteil noch verhältnismäßig groß. Montage und Demontage sind nur möglich, wenn die Gerätedose leer ist. Besonders verbesserungsbedürftig ist diese einfache Konstruktion jedoch aufgrund der Tatsache, daß das Klemmelement nur Verbindung zu einer der Nutenwandungen herstellt.

Eine Konstruktion, die Kräfte großflächig und gleichmäßig vom Montageelement auf die Nutenwandungen überträgt, ist aus der DE-A-33 05 602 bekannt. Diese Konstruktion ist deshalb besonders für die Montage von elektrischen Installationsgeräten geeignet, bei deren Benützung hohe mechanische Kräfte entstehen, beispielsweise für Starkstrom-Steckdosen usw. Um dieses erwünschte Ziel zu erreichen, muß jedoch ein erheblicher mechanisch-konstruktiver Aufwand getrieben werden.

Es hat sich gezeigt, daß ein solch großer Aufwand nicht immer erforderlich ist, daß aber andererseits die einfache Klemmvorrichtung der eingangs beschriebenen Gerätedosen doch nicht ausreicht, oder aber auch gewisse elektrische Probleme mit sich bringt. Der vorliegenden Erfindung liegt deshalb die Aufgabe zugrunde, ein Montageelement der eingangs genannten Art anzugeben, welches eine Verteilung der Klemmkräfte auf beide Nutenwandungen ermöglicht und einfach aufgebaut ist.

Diese Aufgabe wird gelöst durch die kennzeichnenden Merkmale des Anspruchs 1.

Bei der erfindungsgemäßen Konstruktion werden also zwei relativ kleine, identisch geformte Klemmelemente verwendet, je eines rechts und links der Steuerscheibe, so daß jedes Klemmelement die Klemmverbindung mit einer der Nutenwandungen herstellt. Die Befestigung des Montageelements in den Leitungsführungskanälen wird erheblich vereinfacht und beschleunigt, da eine Vierteldrehung der Steuerscheibe ausreicht, um die Klemmverbindung herzustellen bzw. zu lösen. Infolge seiner Kleinheit kann es so angebracht werden, daß es jederzeit von oben zugänglich ist, so daß das Installationsgerät auch nachträglich noch justiert werden kann.

Die Weiterbildung der Erfindung gemäß Anspruch 2 erleichtert das Lösen der Klemmverbindung durch Aufrichten der sich auf der Oberseite des Montageelements befindenden Schenkel der Klemmbügel.

Die Ablaufverhältnisse zwischen Schaltkurve und Klemmbügel sind optimal gemäß dem Merkmal des Anspruchs 3. Die Gefahr eines Verklemmens ist so beseitigt.

Um ein Lösen der Klemmverbindung auch dann sicher zu verhindern, wenn Rüttelschwingungen auf den Kanal bzw. das Montageelement wirken, ist eine Ausgestaltung gemäß Anspruch 4 vorzusehen.

Eine vorteilhafte Weiterbildung der Erfindung gemäß Anspruch 5 sorgt für eine sichere mechanische Lagerung der Steuerscheibe mit direkter Kraftableitung in das Bodenteil des Montageelements sowie eine einwandfreie Isolation der üblicherweise aus Metall bestehenden Klemmbügel gegenüber den unter Spannung stehenden Metallteilen des elektrischen Installationsgerätes.

Eine Ausgestaltung der Steuerscheibe gemäß Anspruch 6 ermöglicht auf einfache Weise das Einsetzen der Steuerscheibe in die Bodenkammer.

Eine Weiterbildung der Erfindung gemäß Anspruch 7 verhindert eine Beschädigung von Steuerscheibe und Klemmbügel auch bei unsachgemäßer Betätigung.

Eine Ausgestaltung der Steuerscheibe gemäß Anspruch 8 erlaubt nicht nur die Herstellung der Steuerscheibe mit Hilfe von einfachen Spritzformen, sondern insbesondere auch den Ausgleich von Dickentoleranzen der Nutenwandungen, des Bodenteils des Montageelements oder auch der Klemmbügel selbst. Im montierten Zustand wird die Feder je nach den tatsächlichen Verhältnissen mehr oder weniger stark zusammengedrückt und gleicht so alle Toleranzen aus.

Eine einfache Herstellung und Fertigung der Steuerscheibe ergibt sich bei Anwendung des Merkmals des Anspruchs 9.

Die Umwandlung der Drehbewegung der Steuerscheibe in die Kippbewegung der Klemmbügel wird erleichtert und unterstützt durch eine Weiterbildung nach Anspruch 10. Dem gleichen Zweck dient auch die Ausgestaltung nach Anspruch 11.

Anhand der Zeichnung soll die Erfindung in Form eines Ausführungsbeispiels näher erläutert werden. Es zeigen ausschnittsweise:

Fig. 1 einen Querschnitt durch den Bodenteil eines Montageelements in einer ersten Position der Drehbefestigung,

Fig. 2 einen Querschnitt durch den Bodenteil der Fig. 1 in einer zweiten Position der Drehbefestigung und

Fig. 3 eine Draufsicht auf den Bodenteil der Fig. 2.

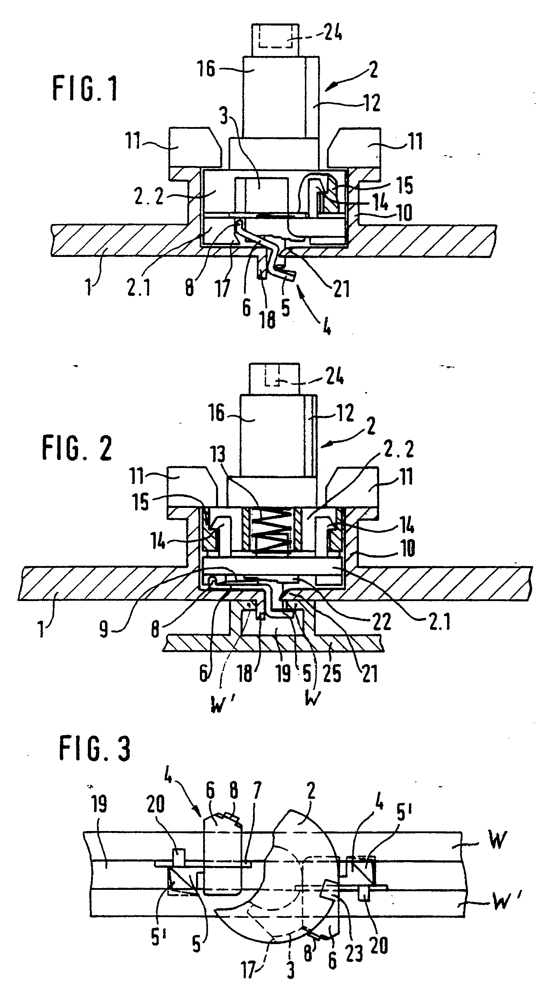

In Fig. 1 erkennt man einen Querschnitt durch ein Bodenteil 1 eines Montageellements, bei dem es sich beispielsweise um eine Montageplatte, den Boden einer Installationsdose oder ähnliches handeln kann.

Auf dem Bodenteil 1 ist eine Steuerscheibe 2 drehbar gelagert. Die Steuerscheibe 2 besteht aus einer unteren Teilscheibe 2.1 und einer oberen Teilscheibe 2.2 und einer Drehachse 16. Die beiden Teilscheiben 2.1, 2.2 sind mit Hilfe von angeformten Rastnasen 14 bzw. Rastnuten 15 so zusammengesteckt, daß ein Spalt zwischen ihnen verbleibt, wobei zwischen den beiden Teilscheiben 2.1, 2.2 eine Druckfeder 13 (Fig. 2) eingesetzt ist.

An der Drehachse 16 ist eine Rippe 12 angeformt, die mit einer (nicht dargestellten) Kulisse am Montageelement zusammenwirkt und den Drehwinkel der Steuerscheibe 2 zusätzlich begrenzt. In die obere Stirnfläche der Drehachse 16 kann ein Schraubendreherschlitz 24 eingeformt sein.

In der Außenseite der Steuerscheibe 2 sind schraubengangartige Schaltkurven 3 eingeformt. In diese Schaltkurven 3 greifen jeweils die oberen Schenkel 6 zweier rechts und links von der Steuerscheibe angeordneter, etwa Z-förmig gebogener Klemmbügel 4 ein. Die Enden 8 der Schenkel 6 der Klemmbügel 4 sind aufwärts gebogen und wirken mit einer an der Steuerkurve 3 unten angeformten Rampe 17 zusammen, so daß die Klemmbügel 4 beim Drehen der Steuerscheibe 2 in die Höhe gehoben werden, ohne zu kanten oder zu klemmen.

Die Steuerscheibe 2 ist in eine auf dem Bodenteil 1 vorgesehene Kammer 10 eingesetzt, die als Führungs- und Halteteil sowie als elektrische Isolierung für die Metallteile der Klemmbügel 4 wirkt. An der Oberseite der Kammer 10 sind Haltestege 11 vorgesehen, die die Steuerscheibe 2 übergreifen und so die beim Drehen der Steuerscheibe 2 entstehenden Kräfte aufnehmen und in das Bodenteil 1 ableiten.

Der etwa Z-förmig gebogene Klemmbügel 4 ist in einen bodenseitigen Längsschlitz so eingesetzt, daß seine unteren Schenkel 5 sich auf der Außenseite des Bodenteils 1 befinden. Wird die Steuerscheibe 2 entgegen dem Uhrzeigersinn verdreht, wird der Klemmbügel 4 gekippt. Dabei gleitet sein Mittelsteg auf der als Gleitschulter 21 ausgebildeten Seitenbegrenzung des Längsschlitzes nach oben, bis der untere Schenkel 5 senkrecht steht. In dieser Position können der Schenkel 5 sowie ein am Bodenteil 1 angeformter Hilfssteg 18 problemlos in eine der T-förmigen Längsnuten 19 von Leitungsführungskanälen eingesetzt werden.

Der fertig montierte Zustand ist in Fig. 2 dargestellt. Man erkennt unterhalb des Bodenteils 1 einen Ausschnitt des Leitungsführungskanals mit seiner T-förmigen Längsnut 19 auf der Kanalrückwand 25. Durch Verdrehen der Steuerscheibe 2 im Uhrzeigersinn wurden die bei den Schenkel 5, 6 des Klemmelements 4 flach gelegt. Dabei klemmt der äußere Schenkel 5 das Montageelement gegen die Wandung W, W' der T-Nut 19. Gleichzeitig wird die untere Teilscheibe 2.1 so weit angehoben, wie es die Summe der Toleranzen von Klemmbügel 4, Kammer 10, Haltesteg 11, Steuerscheibe 2 und Nutenwanddicke erforderlich macht, wobei die Feder 13 den Toleranzausgleich bewirkt. Die dabei entstehende Kraft wird von den übergreifenden Haltestegen 11 auf die Wandung der Kammer 10 und von dieser auf das Bodenteil 1 übertragen.

Wie die Fig. 2 ferner zeigt, sind der innere Schenkel 6 des Klemmelements 4 und die Bodenfläche der Steuerscheibe 2 mit einander entsprechenden, eine Selbsthemmung bewirkenden Rückschrägen 9 versehen. Um die Klemmverbindung lösen zu können, muß also beim Drehen entgegen dem Uhrzeigersinn die Steuerscheibe 2 über diese Rückschräge 9 gedreht werden, wozu einiger Kraftaufwand benötigt wird. Durch diese Konstruktion wird verhindert, daß sich die Drehverbindung beispielsweise bei Rüttel- oder Schwingungsbeanspruchung von selbst löst.

In Fig. 3, bei der alle in den Fig. 1 und 2 noch dargestellten, die Übersichtlichkeit störenden Teile weggelassen wurden, erkennt man eine Draufsicht auf den Gegenstand der Fig. 2.

Man erkennt insbesondere die beiden Klemmbügel 4 mit dem oberen Schenkel 6 und der Anwinkelung 8, mit dem die beiden Klemmbügel 4 in je eine der Schaltkurven 3 der Steuerscheibe 2 eingreifen, und den zur Drehachse gerichteten Zapfen 7, der mit der Hilfskurve 22 zusammenwirkt.

Man erkennt ferner den unteren Schenkel 5, der zur Erhöhung der Klemmwirkung geschlitzt und an einer Ecke 5' angewinkelt ist. Um die Klemmkräfte gleichmäßig abtragen zu können, ist an der Oberseite des Klemmbügels 4 neben dem oberen Schenkel 6 ein Hilfsschenkel 20 vorgesehen.

Wie Fig. 3 zeigt, sind zwei Klemmbügel 4 rechts und links der Steuerscheibe 2 vorgesehen. Durch die spiegelbildliche Anordnung der Klemmbügel 4 greifen die unterseitigen Schenkel 5 sowohl unter die rechte Wand W als auch unter die linke Wand W₁ der T-Nut 19, so daß die Klemm- und Haltekräfte gleichmäßig verteilt werden. Bei größeren Kräften kann entweder die Länge der Klemmbügel 4 vergrößert werden oder es werden mehrere gleichartige Klemmvorrichtungen an dem Montageelement angeordnet.

## Patentansprüche

1. Montageelement zum Einbau in Leitungsführungskanäle, die an der Kanalrückwand Längsnuten (19) mit etwa T-förmigem Querschnitt besitzen, umfassend ein etwa rechteckiges Bodenteil (1) mit einem zentrischen Längsschlitz, in den ein etwa Z-förmiger Klemmbügel (4) so eingesetzt ist, daß im montierten Zustand sein auf der Bodenteil-Oberseite befindlicher Schenkel (6) flach auf dieser aufliegt und sein auf der Bodenteil-Unterseite befindlicher Schenkel (5) in die Nut (19) eingreift und das Montageelement gegen eine den Eingang der Nut (19) begrenzende Wand (W) preßt, dadurch gekennzeichnet, daß an dem Bodenteil (1) eine Steuerscheibe (2) drehbar gelagert ist, daß in die Außenseite der Steuerscheibe (2) schraubengangartige Schaltkurven (3) eingeformt sind, daß zwei Klemmbügel (4) vorgesehen sind, deren Schenkel (5, 6) einander entgegengesetzt gerichtet sind, und daß die oberseitigen Schenkel (6) in jeweils eine der Schaltkurven (3) derart eingreifen, daß je nach Drehstellung der Steuerscheibe (2) die Einführung der unterseitigen Schenkel (5) in die Nut (19) möglich ist oder das Bodenteil (1) mittels der unterseitigen Schenkel (5) gegen beide den Eingang der Nut begrenzende Wände (W,W') geklemmt wird.

2. Montageelement nach Anspruch 1, dadurch gekennzeichnet, daß der oberseitige Schenkel (6) der Klemmbügel (4) an seinem freien Ende (8) angewinkelt ist.

3. Montageelement nach Anspruch 1 oder 2, dadurch gekennzeichnet, daß die Klemmbügel (4) einen zur Drehachse gerichteten Zapfen (7) und die Steuerscheibe (2) eine mit diesem zusammenwirkende bodenseitige Hilfskurve (22) besitzen.

4. Montageelement nach Anspruch 1, 2 oder 3, dadurch gekennzeichnet, daß der oberseitige Schenkel (6) der Klemmbügel (4) und die Unterseite der Steuerscheibe (2) eine zusammenwirkende Rückschräge (9) besitzen.

5. Montageelement nach wenigstens einem der Ansprüche 1 bis 4, dadurch gekennzeichnet, daß Steuerscheibe (2) und Klemmbügel (4) in eine am Bodenteil (1) angeformte Kammer (10) eingesetzt und mit übergreifenden Haltestegen (11) drehbar festgehalten sind.

6. Montageelement nach Anspruch 5, dadurch gekennzeichnet, daß die Steuerscheibe (2) am Umfang mit den Haltestegen (11) korrespondierende Nuten (23) aufweist.

7. Montageelement nach wenigstens einem der Ansprüche 1 bis 6, dadurch gekennzeichnet, daß die Steuerscheibe (2) eine Rippe (12), das Montageelement eine damit zusammenwirkende, den Drehwinkel begrenzende Kulisse aufweist.

8. Montageelement nach wenigstens einem der Ansprüche 1 bis 7, dadurch gekennzeichnet, daß die Steuerscheibe (2) aus zwei Scheiben (2.1,2.2) unter Zwischenlage einer Feder (13) zusammengesteckt ist.

9. Montageelement nach Anspruch 8, dadurch gekennzeichnet, daß an einer Scheibe (2.1) Rastnasen (14), an der anderen Scheibe (2.2) entsprechende Rastnuten (15) angeformt sind.

10. Montageelement nach wenigstens einem der Ansprüche 1 bis 9, dadurch gekennzeichnet, daß die Schaltkurven (3) als etwa parallel zur Drehachse (16) der Steuerscheibe (2) ausgerichtete Nuten mit einer das Aufrichten der Klemmbügel (4) ermöglichenden Rampe (17) ausgebildet sind.

11. Montageelement nach wenigstens einem der Ansprüche 1 bis 10, dadurch gekennzeichnet, daß eine Seitenbegrenzung des Längsschlitzes im Bodenteil (1) als Gleitschulter (21) ausgebildet ist.

## Claims

1. Mounting element for installation into conductor-supporting raceways having longitudinal grooves (19) of a mainly T-shaped cross-section on the rear wall of the raceway, comprising a moreorless rectangular base part (1) with a central longitudinal slit into which an approximately Z-shaped clamping-stirrup (4) is inserted in such a way that in the mounted state its leg (6) which is lying on the upper face of the base part rests flat against it and its leg (5) which is at the underside of the base part engages in the groove (19) and presses the mounting element against a wall (W) defining the opening of the groove (19), characterized in that a control disc (2) is supported rotatably on the base part (1), that switching-curves (3) like screw threads are moulded into the outside of the control disc (2), that two clamping-stirrups (4) are provided, the legs (5, 6) of which are directed opposite ways from one another, and that the legs (6) on the upper face engage respectively in one of the switching-curves (3) in such a way that depending upon the position into which the control disc (2) is turned the introduction of the legs (5) on the underside into the groove (19) is possible or the base part (1) is clamped by means of the legs (5) on the underside against both walls (W, W') defining the opening of the groove.

2. Mounting element as in Claim 1, characterized in that the leg (6) of the clamping-stirrups (4) on the upper face is angled at its free end (8).

3. Mounting element as in Claim 1 or 2, characterized in that the clamping-stirrups (4) have a pin (7) directed towards the pivot and the control disc (2) has an auxiliary curve (22) on the bottom cooperating with the said pin.

4. Mounting element as in Claim 1, 2 or 3, characterized in that the leg (6) of the clamping-stirrups (4) on the upper face and the underside of the control disc (2) have cooperating reverse bevels (9).

5. Mounting element as in at least one of the Claims 1 to 4, characterized in that the control disc (2) and clamping-stirrups (4) are inserted in a chamber (10) moulded onto the base part (1) and secured by overlapping retaining webs (11) so as to be able to turn.

6. Mounting element as in Claim 5, characterized in that the control disc (2) exhibits peripheral grooves (23) corresponding with the retaining webs (11).

7. Mounting element as in at least one of the Claims 1 to 6, characterized in that the control disc (2) exhibits a rib (12) and the mounting element exhibits a gate cooperating with it to limit the angle of turn.

8. Mounting element as in at least one of the Claims 1 to 7, characterized in that the control disc (2) is assembled from two discs (2.1, 2.2) with a spring (13) interposed.

9. Mounting element as in Claim 8, characterized in that latches (14) are moulded on one disc (2.1), corresponding catch grooves (15) being moulded on the other disc (2.2).

10. Mounting element as in at least one of the Claims 1 to 9, characterized in that the switching-curves (3) are formed as grooves aligned nearly in parallel with the pivot (16) of the control disc (2) and having ramps (17) enabling the clamping-stirrups (4) to be set upright.

11. Mounting element as in at least one of the Claims 1 to 10, characterized in that one edge at the side of the longitudinal slit in the base part (1) is formed as a sliding shoulder (21).

## Revendications

1. Elément de montage destiné à être monté dans des canalisations supports de conducteurs qui comportent, sur la paroi arrière de canal, des rainures longitudinales (19) à section transversale à peu près en forme de T, comprenant une partie de fond (1), à peu près rectangulaire, dotée d'une fente longitudinale centrale, dans laquelle un étrier de serrage (4), à peu près en forme de Z, est inséré de telle façon qu'à l'état monté son aile (6), située sur la face supérieure de la partie de fond, repose à plat sur celle-ci et que son aile (5) située en face inférieure de la partie de fond, s'engage dans la rainure (19) et presse l'élément de montage contre une paroi (W) délimitant l'entrée de la rainure (19), caractérisé en ce qu'un disque de commande (2) est monté à rotation sur la partie de fond (1'), en ce que des cames de manoeuvre (3), en forme de pas de vis, sont formées au sein de la face extérieure du disque de commande (2), en ce que deux étrier de serrage (4) sont prévus, dont les ailes (5,6) sont orientées l'une à l'opposé de l'autre, et en ce que les ailes de face supérieure (6) s'engagent, chacune, dans l'une des cames de manoeuvre (3), de telle façon que, selon la position en rotation du disque de commande (2), l'introduction de l'aile de face inférieure (5) dans la rainure (19) soit possible ou que la partie de fond (1) soit serrée, à l'aide de l'aile de face inférieure (5), contre les deux parois (W,W') qui délimitent l'entrée de la rainure.

2. Elément de montage selon la revendication 1, caractérisé en ce que l'aile de face supérieure (6) de l'étrier de serrage (4) est pliée à son extrémité libre (8).

3. Elément de montage selon la revendication 1 ou 2, caractérisé en ce que les étriers de serrage (4) comportent un tourillon (7), orienté vers l'axe de rotation, et le disque de commande (2) comporte une came auxiliaire (22) qui est située du côté du fond et coopère avec ce tourillon (7).

4. Elément de montage selon la revendication 1, 2 ou 3, caractérisé en ce que l'aile de face supérieure (6) des étriers de serrage (5) et la face inférieure du disque de commande (2) comportent un redent, ces redents coopérant entre eux.

5. Elément de montage selon au moins l'une des revendications 1 à 4, caractérisé en ce que le disque de commande (2) et les étriers de serrage (4) sont insérés dans une chambre formée dans la partie de fond (1) et fixés tout en pouvant tourner, à l'aide de nervures de maintien (11) qui les entourent.

6. Elément de montage selon la revendication 5, caractérisé en ce que le disque ce commande (2) présente, en périphérie, des rainures (23), qui correspondent aux nervures de maintien (11).

7. Elément de montage selon au moins l'une des revendications 1 à 6, caractérisé en ce que le disque de commande (2) présente une cannelure (12) et l'élément de montage présente une coulisse coopérant avec celle-ci et limitant l'angle de rotation.

8. Elément de montage selon au moins l'une des revendications 1 à 7, caractérisé en ce que le disque de commande (2) est composé de deux disques (2.1,2.2) assemblés par enfichage, avec interposition d'un ressort (13).

9. Elément de montage selon la revendication 8, caractérisé en ce que des ergots d'encliquetage (14) sont formés sur le premier disque (2.1) d'un seul tenant et que des rainures d'encliquetage (15) correspondantes sont formées sur le deuxième disque (2.2).

10. Elément de montage selon au moins l'une des revendications 1 à 9, caractérisé en ce que les cames de manoeuvre (3) sont réalisées sous forme de gorges, orientées à peu près parallèlement à l'axe de rotation (16) du disque de commande (2), avec une rampe (17) qui permet de redresser les étriers de serrage (4).

11. Elément de montage selon au moins l'une des revendications 1 à 10, caractérisé en ce qu'une délimitation latérale de la fente longitudinale dans la partie de fond (1) est réalisée sous forme d'un épaulement de coulissement (21).

FIG.1

FIG. 2

FIG. 3